# EUROPÄISCHE PATENTSCHRIFT

(11) **EP 1 399 328 B1**
(45) Veröffentlichungstag und Bekanntmachung des Hinweises auf die Patenterteilung: **01.12.2004**
(21) Anmeldenummer: 02742788.9
(22) Anmeldetag: 31.05.2002
(51) Int. Cl.: B60K 35/00, B60K 37/02

(54) **ANZEIGEINSTRUMENT**
INDICATING INSTRUMENT
INSTRUMENT DE SIGNALISATION

(30) Priorität: 29.06.2001 DE 10131262
(43) Veröffentlichungstag der Anmeldung: 24.03.2004
(73) Patentinhaber: SIEMENS AKTIENGESELLSCHAFT, 80333 München (DE)
(72) Erfinder: WEHNER, Manfred, 61200 Wölfersheim (DE)
(86) Internationale Anmeldenummer: PCT/DE2002/002008
(87) Internationale Veröffentlichungsnummer: WO 2003/004298

(56) Entgegenhaltungen:
- EP-A- 0 785 416
- EP-A- 0 900 686
- DE-A- 3 906 721
- DE-A- 19 737 679
- DE-A- 19 801 298
- DE-A- 19 807 483

## Beschreibung

Die Erfindung bezieht sich auf ein Anzeigeinstrument, insbesondere für ein Kraftfahrzeug, mit einer etwa kreisförmigen, auf einem Zifferblatt angeordneten Skala für eine physikalische Größe, entlang der ein um eine Drehachse drehbar antreibbarer Zeiger bewegbar ist, sowie mit einer einen besonderen Bereich der Skala anzeigenden Markierung, wobei die Markierung auf einem Bauteil angeordnet ist, das unterhalb der Ebene des Zifferblatts von einem Markierungsantrieb um die Drehachse des Zeigers in eine Ansteuerposition drehbar antreibbar angeordnet ist und wobei das Zifferblatt entlang der Bewegungsbahn der Markierung ein Fenster besitzt, durch das die Markierung von der Frontseite des Anzeigeinstruments her sichtbar ist.

Bei Anzeigeinstrumenten ist es bekannt entlang der Skala eine Reihe mit Leuchtelementen anzuordnen, von denen das oder die jeweils angesteuerten Leuchtelemente die Markierung bilden. Bei Defekt oder Ausfall eines Leuchtelements ist es aufwendig das Leuchtmittel dieses Leuchtelements auszutauschen. Weiterhin ist eine genaue Markierung nicht möglich, da die Leuchtelemente eine bestimmte Mindestlänge besitzen und somit eine Anzeige nur digital in der festen Rasterung der Reihe der Leuchtelemente möglich ist.

Aus der DE 197 37 679 A ist ein Anzeigeinstrument der eingangs genannten Art bekannt, bei dem die Markierung eine optische Einrichtung ist, durch die Licht einer hinter dem die Markierung tragenden Bauteil angeordneten Lichtquelle durch das Fenster gerichtet wird.

Bei einem weiteren Anzeigeinstrument der eingangs genannten Art (EP-A-0 785 416) ist das die Markierung tragende Bauteil ein Lichtleiter, in dessen eines Ende Licht einer Lichtquelle eingekoppelt und an dessen anderem Ende unter dem Fenster ausgekoppelt wird.

Aus der EP-A-0 900 686 ist ein Anzeigeinstrument bekannt, dessen Zifferblatt in gleicher Ebene von einem ringartigen Bauteil umschlossen ist, das eine leuchtend ausgebildete Markierung trägt und von einem Markierungsantrieb drehbar antreibbar ist. Dabei ist das ringartige Bauteil von einer feststehenden Blende teilweise abgedeckt.

Aus der DE 198 01 298 A ist ein Anzeigeinstrument mit einem Zifferblatt bekannt, hinter dem ein Lichtleiter angeordnet ist, in den von einer Lichtquelle Licht einkoppelbar ist und durch den das Zifferblatt von der Rückseite her durchleuchtbar ist.

Aufgabe der Erfindung ist es ein Anzeigeinstrument der eingangs genannten Art zu schaffen, das einfach und defektunanfällig aufgehaut ist und eine zumindest weitgehende analoge Anzeige der Markierung ermöglicht.

Diese Aufgabe wird bei dem gattungsgemäßen Anzeige instrument erfindungsgemäß dadurch gelöst, daß zwischen Zifferblatt und Markierung tragendem Bauteil ein Lichtleiter angeordnet ist, in den von einer Lichtquelle Licht einkoppelbar ist und durch den Licht das die Markierung tragende Bauteil beaufschlagbar auskoppelbar ist.

Diese Ausbildung führt zu einer einfachen Beleuchtung des Zifferblatts. Da weiterhin keine fest angeordneten Elemente sondern eine auf einem drehbar antreibbaren Bauteil angeordnete Markierung vorhanden ist, kann diese analog exakt in jede beliebige Ansteuerposition entlang ihrer Bewegungsbahn gebracht werden. Der mechanische Aufbau mit einfachen Bauteilen reduziert die Defektanfälligkeit des Anzeigeinstruments. Durch die Anordnung des die Markierung tragenden Bauteils unterhalb der Ebene des Zifferblatts stehen keine Teile über diese Ebene hervor.

Zur ebenfalls einfachen Beleuchtung des Zifferblatts kann zwischen Zifferblatt und Markierung tragendem Bauteil ein Lichtleiter angeordnet sein, in den von einer Lichtquelle Licht einkoppelbar ist und von dem Licht auf die Rückseite des Zifferblatts die durchleuchtbare Skala und/oder durchleuchtbaren Bezifferungen beleuchtend auskoppelbar ist.

Um die Beleuchtung sowohl von Zifferblatt als auch der Markierung besonders einfach zu gestalten, kann durch einen einzigen Lichtleiter die durchleuchtbare Skala und/oder durchleuchtbaren Bezifferungen sowie das die Markierung tragende Bauteil lichtbeaufschlagbar sein.

Ist die lichtbeaufschlagbare Fläche des die Markierung tragenden Bauteils als Lichtreflektor ausgebildet, so wird die Beleuchtung des Fensters im Zifferblatt noch verstärkt.

Zur Reduzierung und Vereinfachung der Bauteile des Anzeigeinstruments kann der Lichtleiter einen an seiner dem Zifferblatt abgewandten Seite hervorstehenden zylindrischen, zur Drehachse des Zeigers koaxialen Ansatz aufweisen, der ein Gleitlager für den das die Markierung tragende Bauteil tragenden Zahnring bildet.

Das Fenster kann sich radial innerhalb, radial außerhalb oder mit der Skala überdeckend erstrecken.

Weiterhin kann das Fenster eine Ausnehmung im Zifferblatt sein.

Ist das Fenster durch einen transparenten oder transluzenten Bereich des Zifferblatts gebildet, so ist der hinter dem Zifferblatt liegende Bereich des Anzeigeinstruments gegen Verschmutzung geschützt.

Die Markierung kann punktartig einen bestimmten Wert der Skala markieren. Unter punktartig ist zu verstehen, daß nur ein einziger Anzeigewert durch die Markierung angezeigt wird. Dabei kann die Markierung z.B. ein Punkt, eine Strichmarkierung oder ein radial zur Skala gerichteter Pfeil sein.

In einer bevorzugten Ausführung kann die Skala eine Fahrgeschwindigkeitskala und die punktartige Markierung eine Setzmarkierung der die Ansteuerposition bildenden gesetzten Fahrgeschwindigkeit eines Fahrgeschwindigkeitsreglers oder eines Fahrgeschwindigkeitsbegrenzers sein.

Eine weitere Möglichkeit besteht darin, daß die Markierung sich entlang eines bestimmten Bereichs der Skala erstreckt, wobei die Markierung skalenartig oder balkenartig ausgebildet sein kann.

Dabei kann die skatenartige oder balkenartige Markierung ein Warnbereich sein, der abhängig von einer weiteren Größe veränderbar einstellbar ist.

Dies ist z.B. der Fall, wenn die Skala eine Motordrehzahlskala und der Warmbereich ein Motordrehzahlwarnbereich für einen Verbrennungsmotor ist.

Das Bauteil kann dabei abhängig von der jeweiligen Betriebstemperatur des Verbrennungsmotors in die Ansteuerposition drehbar antreibbar sein. Dadurch ist es möglich, daß der die maximale zulässige Drehzahl anzeigende Wambereich bei niedriger Betriebstemperatur z.B. nach einem Betriebsbeginn sich in einem niedrigen Motordrehzahlbereich der Skala befindet und entsprechend dem Steigen der Betriebstemperatur sich in einen höheren Motordrehzahlbereich der Skala bewegt.

Das Bauteil kann ein sich radial zur Drehachse erstreckender Arm sein, der die Markierung trägt.

Um einen gleichmäßigen Hintergrund in dem Fenster zu erhalten, ist vorzugsweise das die Markierung tragende Bauteil eine zentrisch zur Drehachse angeordnete Scheibe, die die Markierung trägt.

Ein einfacher Aufbau des Antriebs der Markierung wird dadurch erreicht, daß das die Markierung tragende Bauteil an einem zentrisch zur Drehachse drehbar gelagerten Zahnrad oder Zahnring angeordnet ist, das oder der durch ein Antriebsritzel eines Markierungsantriebs drehbar antreibbar ist.

Ist der Markierungsantrieb ein Schrittmotor, so ist nicht nur eine exakt bestimmbare Ansteuerposition erreichbar sondern auch eine Bestromung nur zur Änderung der Position der Markierung, nicht aber zur Beibehaltung der Position der Markierung erforderlich, was zu einer Energieeinsparung führt.

Ausführungen der Erfindung sind in der Zeichnung dargestellt und werden im folgenden näher beschrieben. Es zeigen
- Figur 1: eine Seitenansicht eines Anzeigeinstruments im Schnitt
- Figur 2: ein erstes Ausführungsbeispiel einer Draufsicht des Anzeigeinstruments nach Figur 1
- Figur 3: ein zweites Ausführungsbeispiel einer Draufsicht des Anzeigeinstruments nach Figur 1.

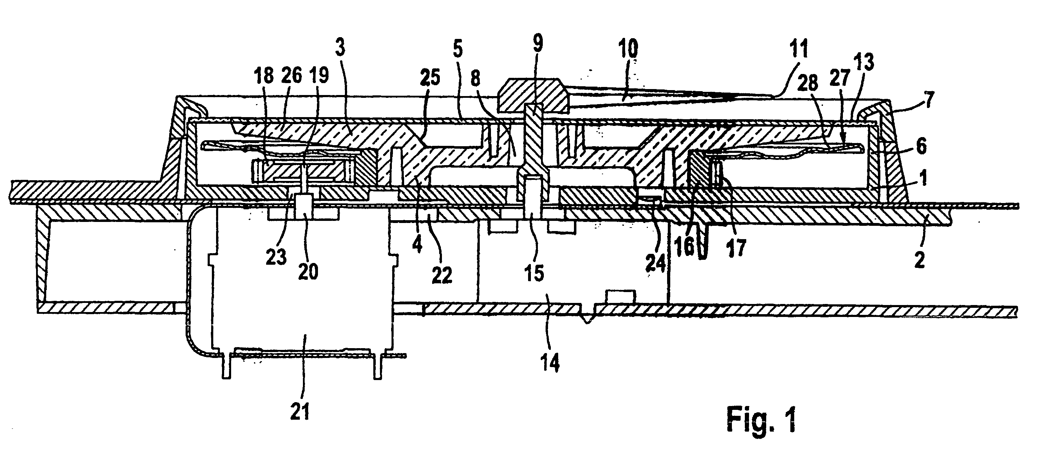

Das in Figur 1 dargestellte Anzeigeinstrument besitzt einen etwa topfförmigen Träger 1, der auf einer Grundplatte befestigt ist. Innerhalb des Topfes des Trägers 1 ist ein kreisscheibenförmiger Lichtleiter 3 angeordnet, der mit einem angeformten zylindrischen Ansatz 4 auf dem Boden des Trägers 1 aufliegt.

Auf der dem Boden des Trägers 1 abgewandten Fläche des Lichtleiters 3 liegt ein Zifferblatt 5 auf, das mit seinem Randbereich radial über den Lichtleiter 3 hinausragt und auf der Stirnseite der umlaufenden Topfwand 6 des Trägers 1 aufliegt.

Durch einen radial umlaufenden Klemmring 7 wird der Randbereich des Zifferblatts 5 auf die Stimseite der Topfwand 6 gepreßt.

Zentrisch weisen Zifferblatt 5, Lichtleiter 3, Träger 1 und Grundplatte 2 eine durchgehende Ausnehmung 8 auf, die von einer Zeigerwelle 9 durchragt wird. Auf dem zifferblattseitigen Ende trägt die Zeigerwelle 9 einen radial gerichteten Zeiger 10, der bei Drehung der Zeigerwelle 9 mit seiner Zeigerspitze 11 entlang einer kreisförmig angeordneten Skala 12 streicht, deren Skalenstriche durchleuchtbar sind.

Die kreisförmige Skala ist zu etwa dreiviertel von einem ein bogenförmiges Fenster 13 bildenden transparenten Bereich des Zifferblatts 5 umschlossen. Dabei reicht der Lichtleiter 3 radial bis zur inneren Begrenzung des bogenförmigen Fensters 13, während die radial äußere Begrenzung des Fensters 13 durch den Innenumfang des Klemmrings 7 gebildet wird.

Zum Drehantrieb des Zeigers 10 dient ein an der dem Träger 1 abgewandten Seite der Grundplatte 2 befestigter Zeigerantrieb 14, dessen Antriebszapfen 15 koaxial drehfest mit der Zeigerwelle 9 verbunden ist.

Der zylindrische Ansatz bildet ein Gleitlager, auf dem ein Zahnring 16 mit seinem radial umlaufenden Innenumfang drehbar gelagert ist. Mit seinen radial gerichteten Zähnen 17 greift der Zahnring in die Zähne eines Antriebsritzels 18 ein, dessen Drehachse sich parallel zur Drehachse der Zeigerwelle 9 erstreckt.

Die Antriebswelle 19 des Antriebsritzels 18 ragt durch eine Ausnehmung 23 in den Boden des Trägers 1 und ist koaxial drehfest mit dem Antriebszapfens 20 eines Markierungsantriebs 21 verbunden, der durch eine Ausnehmung 22 in der Grundplatte 2 ragend auf der dem Lichtleiter 3 abgewandten Seite des Bodens des Trägers 1 angeordnet ist. An dem Zahnring 16 ist eine ringförmige Scheibe 27 angeordnet, die sich radial bis unter das Fenster 13 erstreckt und deren dem Lichtleiter 3 und dem Fenster 13 zugewandte Fläche als Lichtreflektor 28 ausgebildet ist.

In dem Boden des Trägers 1 ist weiterhin ein Lichtquelle 24 angeordnet, durch die axial im Bereich des Ansatzes 4 Licht in den Lichtleiter 3 eingekoppelt wird, das an einer Umlenkfläche 25 in den radial gerichteten Bereich 26 des Lichtleiters 3 umgelenkt und dort über den gesamten umlaufenden radial gerichteten Bereich 26 verteilt wird.

Die Skalenstriche des an der einen Lichtleiterseite angrenzenden Zifferblatts 5 werden durch aus dem Lichtleiter 3 ausgekoppelten Licht durchleuchtet.

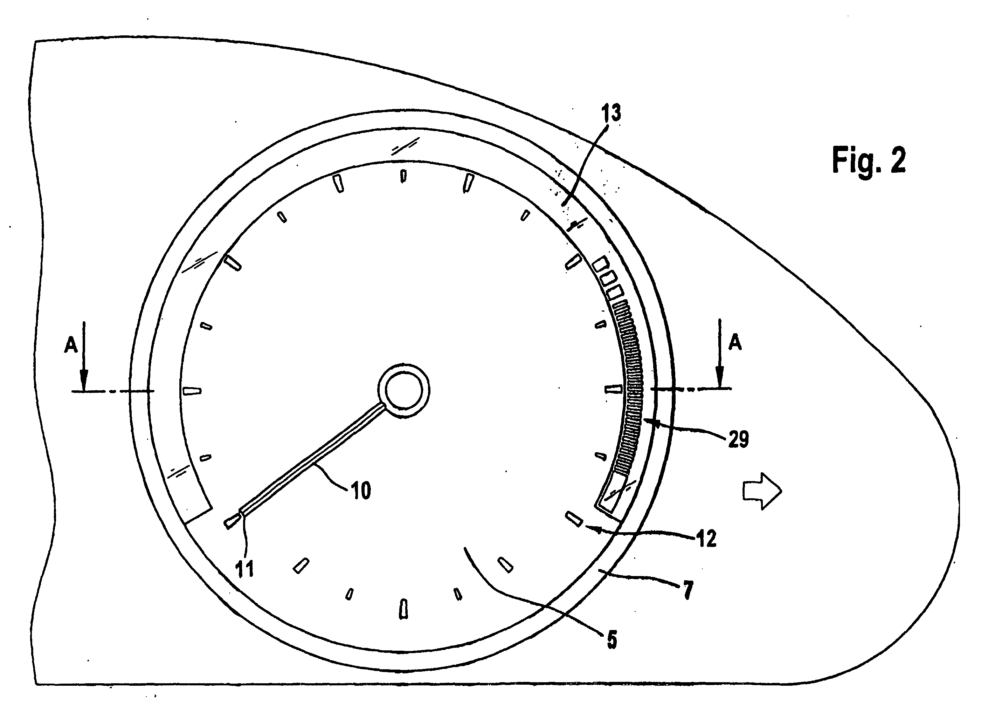

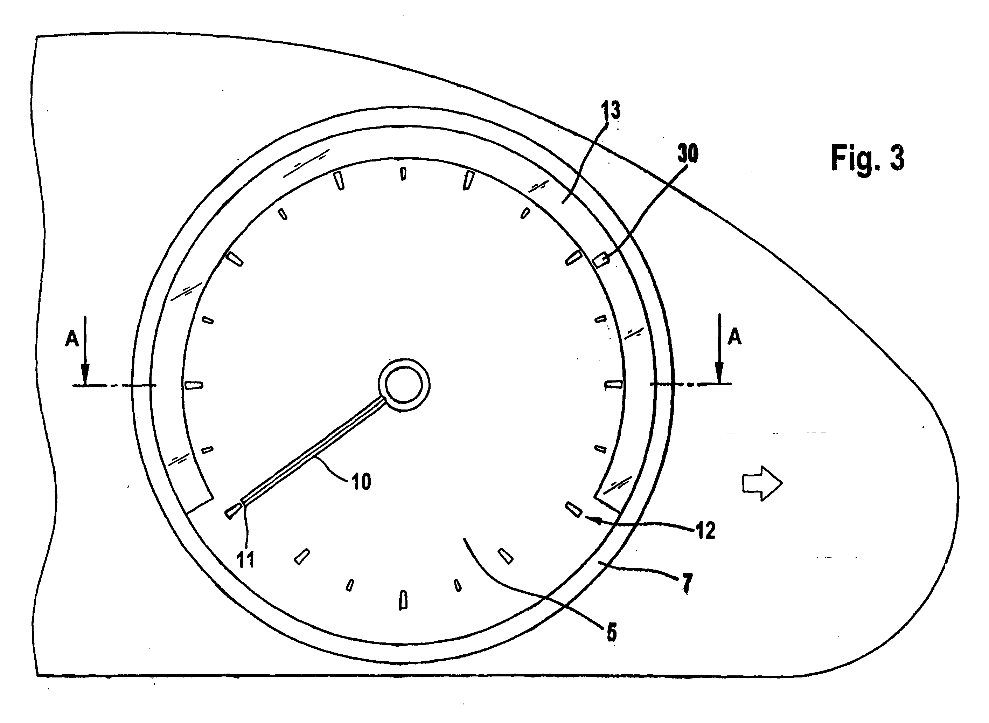

Das auf der dem Zifferblatt 5 gegenüberliegenden Fläche des Lichtleiters 3 ausgekoppelte Licht trifft als Auflicht auf die die Markierung tragende Scheibe 27 auf und beleuchtet so diese Markierung. Da die Scheibe 27 als Lichtreflektor 28 ausgebildet ist, wird weiterhin das bogenförmige Fenster 13 beleuchtet. Der Aufbau des in Figur 1 dargestellten Anzeigeinstruments ist für die beiden in den Figuren 2 und 3 dargestellten Ausführungsbeispiele gleich.

In Figur 1 ist die Skala 12 eine Motordrehzahlskala, auf der der Zeiger 10 die jeweilige Drehzahl eines Verbrennungsmotors eines Kraftfahrzeugs anzeigt.

Auf der Scheibe 27 ist im Bereich des Fensters 13 als skalenartige Markierung 29 ein Motordrehzahlwambereich aufgetragen, der zur Vermeidung von Schäden am Verbrennungsmotor nicht überschritten werden soll. Da die maximal zulässige Motordrehzahl von der jeweiligen Motortemperatur abhängig ist, wird diese von einem nicht dargestellten Temperatursensor erfaßt und entsprechend der Markierungsantrieb 21 angesteuert. Dieser dreht über das Antriebsritzel 18 und den Zahnring 16 die Scheibe 27 in eine Ansteuerposition, in der die maximale Markierung der skalenartigen Markierung 29 der Position der Motordrehzahlskala gegenühersteht, die der der momentanen Motortemperatur entsprechenden maximal zulässigen Motordrehzahl entspricht. Mit ansteigender Motortemperatur steigt auch die maximal zulässige Motordrehzahl an, so daß die Position der skalenartigen Markierung 29 entsprechend verändert wird.

In Figur 2 ist die Skala 12 eine Fahrgeschwindigkeitsskala, auf der der Zeiger 10 die jeweilige Fahrtgeschwindigkeit eines Kraftfahrzeugs anzeigt. Auf der Scheibe 27 ist im Bereich des Fensters 13 eine Strichmarkierung 30 aufgetragen, die als Setzmarkierung eines Fahrtgeschwindigkeitsreglers dient. Entsprechend der von einem Fahrer eines Kraftfahrzeugs gewünschten und von einem Fahrtgeschwindigkeitsregler zu regelnden Fahrtgeschwindigkeit wird der Markierungsantrieb 21 angesteuert. Dieser dreht über das Antriebsritzel 18 und den Zahnring 16 die Scheibe 27 in eine Ansteuerposition, in der die Strichmarkierung 30 der Position der Fahrtgeschwindigkeitsskala gegenübersteht, die der gesetzten Fahrtgeschwindigkeit entspricht.

## Patentansprüche

1. Anzeigeinstrument, insbesondere für ein Kraftfahrzeug, mit einer etwa kreisförmigen, auf einem Zifferblatt angeordneten Skala für eine physikalische Größe, entlang der ein um eine Drehachse drehbar antreibbarer Zeiger bewegbar ist, sowie mit einer einen besonderen Bereich der Skala anzeigenden Markierung, wobei die Markierung auf einem Bauteil angeordnet ist, das unterhalb der Ebene des Zifferblatts von einem Markierungsantrieb um die Drehachse des Zeigers in eine Ansteuerposition drehbar antreibbar angeordnet ist und wobei das Zifferblatt entlang der Bewegungsbahn der Markierung ein Fenster besitzt, durch das die Markierung von der Frontseite des Anzeigeinstruments her sichtbar ist, **dadurch gekennzeichnet , dass** zwischen Zifferblatt (5) und Markierung tragendem Bauteil ein Lichtleiter (3) angeordnet ist, in den von einer Lichtquelle (24) Licht einkoppelbar ist und durch den Licht das die Markierung tragende Bauteil beaufschlagbar auskoppelbar ist.

2. Anzeigeinstrument nach Anspruch 1, **dadurch gekennzeichnet, dass** zwischen Zifferblatt (5) und Markierung tragendem Bauteil ein Lichtleiter (3) angeordnet ist, in den von einer Lichtquelle (24) Licht einkoppelbar ist und durch den Licht auf die Rückseite des Zifferblatts (5) die durchleuchtbare Skala (12) und/oder durchleuchtbaren Bezifferungen beleuchtend auskoppelbar ist.

3. Anzeigeinstrument nach Anspruch 2, **dadurch gekennzeichnet, dass** durch einen einzigen Lichtleiter (3) die durchleuchtbare -Skala (12) und/oder durchleuchtbaren Bezifferungen sowie das die Markierung tragende Bauteil lichtbeaufschlagbar ist.

4. Anzeigeinstrument nach einem der vorhergehenden Ansprüche, **dadurch gekennzeichnet, dass** die lichtbeaufschlagbare Fläche des die Markierung tragenden Bauteils als Lichtreflektor (28) ausgebildet ist.

5. Anzeigeinstrument nach einem der vorhergehenden Ansprüche, **dadurch gekennzeichnet, dass** der Lichtleiter (3) einen an seiner dem Zifferblatt (5) abgewandten Seite hervorstehenden zylindrischen, zur Drehachse des Zeigers koaxialen Ansatz (4) aufweist, der ein Gleitlager für den das die Markierung tragende Bauteil tragenden Zahnring (16) bildet.

6. Anzeigeinstrument nach einem der vorhergehenden Ansprüche, **dadurch gekennzeichnet, dass** das Fenster sich radial innerhalb, radial außerhalb oder mit der Skala (12) überdeckend erstreckt.

7. Anzeigeinstrument nach einem der vorhergehenden Ansprüche, **dadurch gekennzeichnet, dass** das Fenster eine Ausnehmung im Zifferblatt ist.

8. Anzeigeinstrument nach einem der Ansprüche 1 bis 4, **dadurch gekennzeichnet, dass** das Fenster (13) durch einen transparenten oder transluzenten Bereich des Zifferblatts (5) gebildet ist.

9. Anzeigeinstrument nach einem der vorhergehenden Ansprüche, **dadurch gekennzeichnet, dass** die Markierung punktartig einen bestimmten Wert der Skala (12) markiert.

10. Anzeigeinstrument nach Anspruch 9, **dadurch gekennzeichnet, dass** die Skala (12) eine Fahrgeschwindigkeitsskala und die punktartige Markierung eine Setzmarkierung der die Ansteuerposition bildenden gesetzten Fahrgeschwindigkeit eines Fahrgeschwindigkeitsreglers oder eines Fahrgeschwindigkeitsbegrenzers ist.

11. Anzeigeinstrument nach einem der Ansprüche 1 bis 7, **dadurch gekennzeichnet, dass** die Markierung sich entlang eines bestimmten Bereichs der Skala (12) erstreckt.

12. Anzeigeinstrument nach Anspruch 11, **dadurch gekennzeichnet, dass** die Markierung (29) skalenartig oder balkenartig ausgebildet ist.

13. Anzeigeinstrument nach Anspruch 12, **dadurch gekennzeichnet, dass** die skalenartige oder balkenartige Markierung (29) ein Warnbereich ist.

14. Anzeigeinstrument nach Anspruch 13, **dadurch gekennzeichnet, dass** die Skala (12) eine Motordrehzahlskala und der Warnbereich ein Motordrehzahlwarnbereich für einen Verbrennungsmotor ist.

15. Anzeigeinstrument nach Anspruch 14, **dadurch gekennzeichnet dass** das Bauteil abhängig von der jeweiligen Betriebstemperatur des Verbrennungsmotors in die Ansteuerposition drehbar antreibbar ist.

16. Anzeigeinstrument nach einem der vorhergehenden Ansprüche, **dadurch gekennzeichnet, dass** das Bauteil ein sich radial zur Drehachse erstreckender Arm ist, der die Markierung trägt.

17. Anzeigeinstrument nach einem der Ansprüche 1 bis 15, **dadurch gekennzeichnet, dass** das Bauteil eine zentrisch zur Drehachse angeordnete Scheibe (27) ist, die die Markierung trägt.

18. Anzeigeinstrument nach einem der vorhergehenden Ansprüche, **dadurch gekennzeichnet, dass** das die Markierung tragende Bauteil an einem zentrisch zur Drehachse drehbar gelagerten Zahnrad oder Zahnring (16) angeordnet ist, das oder der durch ein Antriebsritzel (18) des Markierungsantriebs (21) drehbar antreibbar ist.

19. Anzeigeinstrument nach einem der vorhergehenden Ansprüche, **dadurch gekennzeichnet, dass** der Markierungsantrieb (21) ein Schrittmotor ist.

## Claims

1. Indicating instrument, particularly for a motor vehicle, comprising an approximately circular scale, arranged on a dial, for a physical quantity, along which a pointer that can be driven rotatably about an axis of rotation can be moved, and comprising a marking indicating a particular area of the scale, the marking being arranged on a component that is arranged below the plane of the dial such that it can be driven rotatably by a marking drive about the axis of rotation of the pointer into a control position, and the dial having along the movement path of the marking a window through which the marking is visible from the front side of the indicating instrument, **characterized in that**, arranged between the dial (5) and component carrying the marking is an optical conductor (3) into which light can be launched by a light source (24) and through which the light can be coupled out so that it can be applied to the component carrying the marking.

2. Indicating instrument according to Claim 1, **characterized in that** arranged between the dial (5) and component carrying the marking is an optical conductor (3) into which light can be launched by a light source (24), and by which light can be coupled out onto the rear side of the dial (5) in a fashion illuminating the transilluminable scale (12) and/or transilluminable numerals.

3. Indicating instrument according to Claim 2, **characterized in that** a single optical conductor (3) can apply light to the transilluminable scale (12) and/or to the transilluminable numerals, as well as to the component carrying the marking.

4. Indicating instrument according to one of the preceding claims, **characterized in that** that surface of the component carrying the marking to which light can be applied is designed as a light reflector (28).

5. Indicating instrument according to one of the preceding claims, **characterized in that** the optical conductor (3) has a cylindrical lug (4) that projects on the side of the optical conductor averted from the dial (5), is coaxial with the axis of rotation of the pointer, and forms a slide bearing for the toothed ring (16) carrying the component carrying the marking.

6. Indicating instrument according to one of the preceding claims, **characterized in that** the window extends radially inside or radially outside the scale (12), or together with the scale (12) in a fashion covering it.

7. Indicating instrument according to one of the preceding claims, **characterized in that** the window is a cutout in the dial.

8. Indicating instrument according to one of Claims 1 to 4, **characterized in that** the window (13) is formed by a transparent or translucent region of the dial (5).

9. Indicating instrument according to one of the preceding claims, **characterized in that** the marking marks a specific value of the scale (12) in a punctiform fashion.

10. Indicating instrument according to Claim 9, **characterized in that** the scale (12) is a driving speed scale, and the punctiform marking is a setting marking of the set driving speed forming the control position of a travelling speed controller or a travelling speed limiter.

11. Indicating instrument according to one of Claims 1 to 7, **characterized in that** the marking extends along a specific area of the scale (12).

12. Indicating instrument according to Claim 11, **characterized in that** the marking (29) is designed like a scale or like a bar.

13. Indicating instrument according to Claim 12, **characterized in that** the scale-type or bar-like marking (29) is a warning area.

14. Indicating instrument according to Claim 13, **characterized in that** the scale (12) is an engine speed scale, and the warning area is an engine speed warning range for an internal combustion engine.

15. Indicating instrument according to Claim 14, **characterized in that** the component can be driven rotatably into the control position as a function of the respective operating temperature of the internal combustion engine.

16. Indicating instrument according to one of the preceding claims, **characterized in that** the component is an arm that extends radially from the axis of rotation and carries the marking.

17. Indicating instrument according to one of Claims 1 to 15, **characterized in that** the component is a disc (27) that is arranged centrally relative to the axis of rotation and carries the marking.

18. Indicating instrument according to one of the preceding claims, **characterized in that** the component carrying the marking is arranged at a toothed wheel or toothed ring (16) that is supported rotatably in a central fashion relative to the axis of rotation and can be driven rotatably by a drive pinion (18) of the marking drive (21).

19. Indicating instrument according to one of the preceding claims, **characterized in that** the marking drive (21) is a stepping motor.

## Revendications

1. Instrument indicateur, notamment pour un véhicule automobile, comportant une graduation approximativement circulaire pour une grandeur physique, disposée sur un cadran et le long de laquelle une aiguille peut être entraînée en rotation autour d'un axe de rotation, et comportant un repère indiquant une région particulière de la graduation, le repère étant disposé sur un élément qui est disposé en dessous du plan du cadran en pouvant être entraîné par un entraînement de repère, en rotation autour de l'axe de rotation de l'aiguille, dans une position d'asservissement, et le cadran possédant, le long de la trajectoire de déplacement du repère, une fenêtre à travers laquelle le repère est visible depuis le côté avant de l'instrument indicateur, **caractérisé en ce qu'**un guide (3) de lumière est disposé entre le cadran (5) et l'élément portant le repère, guide dans lequel peut être introduite de la lumière provenant d'une source (24) lumineuse et par lequel peut être délivrée de la lumière pouvant alimenter l'élément portant le repère.

2. Instrument indicateur suivant la revendication 1, **caractérisé en ce qu'**un guide (3) de lumière est disposé entre le cadran (5) et l'élément portant le repère, guide dans lequel peut être introduite de la lumière provenant d'une source (24) lumineuse et par lequel peut être délivrée, sur le côté arrière du cadran (5), de la lumière éclairant la graduation (12) éclairable par transmission et/ou des chiffres éclairables par transmission.

3. Instrument indicateur suivant la revendication 2, **caractérisé en ce que** la graduation (12) éclairable par transmission et/ou les chiffres éclairables par transmission, ainsi que l'élément portant le repère, peuvent être alimentés en lumière par un unique guide (3) de lumière.

4. Instrument indicateur suivant l'une des revendications précédentes, **caractérisé en ce que** la surface pouvant être alimentée en lumière d e l'élément portant le repère est réalisée sous forme de réflecteur (28) de lumière.

5. Instrument indicateur suivant l'une des revendications précédentes, **caractérisé en ce que** le guide (3) de lumière comporte un appendice (4) cylindrique, dépassant sur son côté éloigné du cadran (5) et coaxial à l'axe de rotation de l'aiguille, qui constitue un palier lisse pour la couronne (16) dentée qui porte l'élément portant le repère.

6. Instrument indicateur suivant l'une des revendications précédentes, **caractérisé en ce que** la fenêtre s'étend radialement à l'intérieur ou à l'extérieur de la g raduation (12), ou e n recouvrement d e la graduation (12).

7. Instrument indicateur suivant l'une des revendications précédentes, **caractérisé en ce que** la fenêtre est un évidement dans le cadran.

8. Instrument indicateur suivant l'une des revendications 1 à 4, **caractérisé en ce que** la fenêtre (13) est formée par une région transparente ou translucide du cadran (5).

9. Instrument indicateur suivant l'une des revendications précédentes, **caractérisé en ce que** le repère identifie ponctuellement une valeur donnée de la graduation (12).

10. Instrument indicateur suivant la revendication 9, **caractérisé en ce que** la graduation (12) est une graduation de vitesse de marche, et le repère ponctuel est un repère de réglage de la vitesse de marche réglée, constituant la position d'asservissement, d'un régulateur de vitesse de marche ou d'un limiteur de vitesse de marche.

11. Instrument indicateur suivant l'une des revendications 1 à 7, **caractérisé en ce que** le repère s'étend le long d'une région donnée de la graduation (12).

12. Instrument indicateur suivant la revendication 11, **caractérisé en ce que** le repère (29) est réalisé sous forme de graduation ou sous forme de barres.

13. Instrument indicateur suivant la revendication 12, **caractérisé en ce que** le repère (29) sous forme de graduation ou de barres est une plage d'avertissement.

14. Instrument indicateur suivant la revendication 13, **caractérisé en ce que** la graduation (12) est une graduation de régime moteur et la plage d'avertissement est une plage d'avertissement de régime moteur pour un moteur à combustion interne.

15. Instrument indicateur suivant la revendication 14, **caractérisé en ce que** l'élément peut être entraîné en rotation dans la position d'asservissement en fonction de la température respective de fonctionnement du moteur à combustion interne.

16. Instrument indicateur suivant l'une des revendications précédentes, **caractérisé en ce que** l'élément est un bras s'étendant radialement à l'axe de rotation et portant le repère.

17. Instrument indicateur suivant l'une des revendications 1 à 15, **caractérisé en ce que** l'élément est un disque (27) disposé de manière centrée par rapport à l'axe de rotation et portant le repère.

18. Instrument indicateur suivant l'une des revendications précédentes, **caractérisé en ce que** l'élément portant le repère est disposé sur une roue dentée ou une couronne (16) dentée montée tournante de manière centrée par rapport à l'axe de rotation, qui peut être entraînée en rotation par un pignon (18) d'entraînement de l'entraînement (21) de repère.

19. Instrument indicateur suivant l'une des revendications précédentes, **caractérisé en ce que** l'entraînement (21) de repère est un moteur pas à pas.
